# EUROPÄISCHE PATENTSCHRIFT

(11) **EP 3 026 513 B1**
(45) Veröffentlichungstag und Bekanntmachung des Hinweises auf die Patenterteilung: **03.01.2018**
(21) Anmeldenummer: 14195312.5
(22) Anmeldetag: 28.11.2014
(51) Int. Cl.: G05B 19/408, G05B 19/414, G05B 19/042

(54) **Redundantes Automatisierungssystem und Verfahren zum Betrieb**
Redundant automation system and method for operating same
Système d'automatisation redondant et procédé de fonctionnement

(43) Veröffentlichungstag der Anmeldung: 01.06.2016
(73) Patentinhaber: Siemens Aktiengesellschaft, 80333 München (DE)
(72) Erfinder: Arbogast, Hans-Jürgen, 92289 Ursensollen (DE)

(56) Entgegenhaltungen:
- DE-B3-102009 050 449
- US-A- 5 148 433

## Beschreibung

Die Erfindung betrifft ein redundantes Automatisierungssystem zur Steuerung einer technischen Einrichtung umfassend ein erstes Automatisierungsgerät und ein zweites Automatisierungsgerät, wobei das erste Automatisierungsgerät ein erstes Steuerungsprogramm und das zweite Automatisierungsgerät ein zweites Steuerungsprogramm zum Steuern der technischen Einrichtung aufweist, wobei das erste und das zweite Steuerungsprogramm derart ausgestaltet sind, dass sie jeweils die gleichen Steuerungsaufgaben für den technischen Prozess ausführen, wobei das erste Automatisierungsgerät eine erste Datenschnittstelle, welche an einen Feldbus angeschlossen ist und das zweite Automatisierungsgerät eine zweite Datenschnittstelle aufweist, welche an den Feldbus angeschlossen ist, wobei der ersten Datenschnittstelle eine erste Adresse und der zweiten Datenschnittstelle eine zweite Adresse zugeordnet ist.

Ein redundantes Automatisierungssystem wird auch als ein H-System (Hochverfügbares System) bezeichnet. Ein solches H-System ist ein ausfallsicheres Automatisierungssystem, welches in der Regel zwei gekoppelte Automatisierungsgeräte, insbesondere speicherprogrammierbare Steuerungen, aufweist, welche gemeinsam eine technische Einrichtung steuern. Dabei hat zu jedem Zeitpunkt ein Automatisierungsgerät die Führung bei der Steuerung der technischen Einrichtung. Das jeweils führende Automatisierungsgerät wird auch als Haupt-Automatisierungsgerät oder Master bezeichnet. Das jeweils andere Automatisierungsgerät ist bereit jederzeit die Steuerung der technischen Einrichtung zu übernehmen. Das andere Automatisierungsgerät wird auch als Ersatz-Automatisierungsgerät oder Reserve bezeichnet. Sollte einer der beiden Automatisierungsgeräte ausfallen, ist es möglich, dass der gesamte technische Prozess von nur einem Automatisierungsgerät gesteuert wird, welches auch als hochverfügbar bezeichnet wird. Jedes Automatisierungsgerät in einem H-System verfügt über eine eigene Schnittstelle, beispielsweise eine Ethernet-Schnittstelle, mit einer eigenen IP-Adresse für die Kommunikation an einem Feldbus.

In der DE 10 2009 050 449 B3 ist auch ein H-System mit einer ersten Automatisierungssteuerung und einer zweiten Automatisierungssteuerung offenbart.

Das US-Patent US 5 148 433 A wird ein H-System vorgestellt, wobei beide Steuerungen dieselbe Adresse haben.

In einer Automatisierungsanlage existieren in der Regel viele Teilnehmer, welche sich mit dem redundantes Automatisierungssystem verbinden müssen um Prozessdaten abzuliefern oder abzuholen, bzw. anzuzeigen oder zu verarbeiten. Unter den genannten Teilnehmern hat eine große Anzahl der Teilnehmer kein Wissen über eine Existenz eines redundanten Automatisierungssystems (2-CPU-System).

Bei den bekannten H-Systemen ist es von Nachteil, dass für Teilnehmer, welche eine Verbindung zu einem H-System aufbauen müssen, nicht klar ist, welche entfernte IP-Adresse das H-System hat. Entweder hat es eine erste Adresse für das erste Automatisierungsgerät oder eine zweite Adresse für das zweite Automatisierungsgerät. Wird eine der beiden Adressen verwendet und genau das Automatisierungsgerät mit der verwendeten Adresse fällt aus, so kann der Teilnehmer die Verbindung nicht mehr aufbauen, obwohl das H-System als Ganzes noch verfügbar ist.

Bisher wurde das Problem derart gelöst, dass funktional erweiterte Teilnehmer (Client, HMI's) existieren, welche eine weitere IP-Adresse konfiguriert haben. Fällt die Verbindung mit der ersten Adresse aus und kann nicht wieder aufgebaut werden, so wird mit einer zweiten IP-Adresse gearbeitet. Der Nachteil dieser Lösung ist, dass in den Teilnehmern eine Spezialimplementierung für die Adressverwaltung notwendig ist.

Es ist Aufgabe der vorliegenden Erfindung auf eine Spezialimplementierung in den Teilnehmern zu verzichten.

Die Aufgabe wird für das eingangs genannte redundante Automatisierungssystem durch ein Referenzmittel mit einer an den Feldbus angeschlossenen Referenzdatenschnittstelle, welcher eine Referenzadresse zugeordnet ist, gelöst, wobei das Referenzmittel ausgestaltet ist, einen ersten Verbindungsweg zwischen weiteren an den Feldbus angeschlossenen Automatisierungskomponenten und dem ersten Automatisierungsgerät zu schalten und weiterhin ausgestaltet ist, einen Ausfall des ersten Automatisierungsgerätes zu erkennen und daraufhin einen zweiten Verbindungsweg zwischen den weiteren an den Feldbus angeschlossenen Automatisierungskomponenten und dem zweiten Automatisierungsgerät zu schalten. Mit dem erfindungsgemäßen redundanten Automatisierungssystem ist es nunmehr nicht mehr notwendig, dass in einem Teilnehmer bzw. in den weiteren an den Feldbus angeschlossenen Automatisierungskomponenten, welche mit dem redundanten Automatisierungssystem kommunizieren wollen, ein Mechanismus implementiert sein muss, welcher für die Adressumschaltung nach Ausfall einer Verbindung sorgt. Es können nun beliebig viele Teilnehmer eingesetzt werden, welche überhaupt keine Kenntnis davon haben, dass sie mit einem H-System kommunizieren.

In einer vorteilhaften Ausgestaltung ist vorgesehen, dass ein Verbindungsaufbau durch die weiteren Automatisierungskomponenten zu dem ersten Automatisierungsgerät oder zu dem zweiten Automatisierungsgerät durch Ansprechen der Referenzadresse des Referenzmittels durch die weiteren Automatisierungskomponenten aufgebaut ist. Eine logische Verbindung zu mehreren Geräten wird durch das Hinzufügen einer Indirektion gelöst. Sämtliche Teilnehmer, ebenso Teilnehmer, welche keinerlei Kenntnis von einem H-System haben, können das H-System unter der festen Referenzadresse ansprechen. Ein Ausfall einer CPU bzw. eines Automatisierungsgerätes oder ein sogenannter Master-Rollenwechsel bleibt von den Teilnehmern nahezu verborgen.

Insbesondere für eine Nachrüstung eines redundanten Automatisierungssystems mit dem bereits beschriebenen Referenzmittel ist es von Vorteil, wenn das Referenzmittel als ein separates Gerät ausgestaltet ist und getrennt von dem ersten Automatisierungsgerät und dem zweiten Automatisierungsgerät an den Feldbus angeschlossen ist. So können beispielsweise bestehende redundante Automatisierungssystem-Anlagen durch einfaches Anschalten an einer beliebigen Stelle des Feldbusses des Referenzmittels derart hochgerüstet werden, dass es nicht mehr notwendig ist, dass die an dem Feldbus angeschlossenen weiteren Teilnehmern Kenntnis über zwei mögliche ansprechbare Adressen haben.

Für eine erweitere Diagnose hat sich gezeigt, dass es von Vorteil ist, wenn das Referenzmittel ein Überwachungsmittel aufweist, welches ausgestaltet ist, aufgebaute Verbindungen der weiteren Automatisierungskomponenten zu dem ersten Automatisierungsgerät auf einen Verbindungsabbruch zu Überwachen.

Bei einer besonders optimierten Ausgestaltungsvariante des redundanten Automatisierungssystems weist das Referenzmittel ein Initialisierungsmittel auf, welches ausgestaltet ist beim erstmaligen Anschalten des Referenzmittels an den Feldbus das erste Automatisierungsgerät und/oder das zweite Automatisierungsgerät über seine Existenz am Feldbus zu informieren, wobei weiterhin die Automatisierungsgeräte ausgestaltet sind, aufgrund der Existenz des Referenzmittels diesem mitzuteilen, welches der beiden Automatisierungsgeräte z.Z. die technische Einrichtung steuert. Demnach benachrichtigt das erste Automatisierungsgerät oder das Haupt-Automatisierungsgerät oder der Master das Referenzmittel über diese Eigenschaft. Ein beliebiger Teilnehmer kann demnach eine Verbindung zu dem Referenzmittel aufbauen und dieser leitet den Datenstrom (Verbindung) zu dem aktuellen als Master konfigurierten Automatisierungsgerät weiter.

Die zugrunde liegende Aufgabe wird ebenfalls durch ein Verfahren zum Betrieb eines redundanten Automatisierungsgerätes zur Steuerung einer technischen Einrichtung gelöst, wobei ein erstes Automatisierungsgerät als ein Haupt-Automatisierungsgerät betrieben wird und ein zweiten Automatisierungsgerät als ein Ersatz-Automatisierungsgerät betrieben wird, wobei das erste Automatisierungsgerät mit den zweiten Automatisierungsgerät über eine Kopplung synchronisiert wird, wobei in dem ersten Automatisierungsgerät ein erstes Steuerungsprogramm und in dem zweiten Automatisierungsgerät ein zweites Steuerungsprogramm zum Steuern der technischen Einrichtung betrieben wird, wobei das erste und das zweite Steuerungsprogramm funktional jeweils die gleichen Steuerungsaufgaben für die technische Einrichtung ausführen, wobei das erste Automatisierungsgerät über eine erste Datenschnittstelle an einen Feldbus betrieben wird und das zweite Automatisierungsgerät über eine zweite Datenschnittstelle an dem Feldbus betrieben wird, wobei der ersten Datenschnittstelle eine erste Adresse und der zweiten Datenschnittstelle eine zweite Adresse zugeordnet wird. Verfahrensgemäß wird ein Referenzmittel mit einer Referenzadresse derart betrieben, dass es einen ersten Verbindungsweg zwischen weiteren an den Feldbus angeschlossenen Automatisierungskomponenten zu dem ersten Automatisierungsgerät schaltet und weiterhin betrieben wird einen Ausfall des ersten Automatisierungsgerätes zu erkennen und daraufhin einen zweiten Verbindungsweg zwischen den weiteren an den Feldbus angeschlossenen Automatisierungskomponenten zu dem zweiten Automatisierungsgerät zu schalten. Bei Ausfall des Haupt-Automatisierungsgerätes des redundanten Automatisierungssystems bzw. des H-Systems, muss die Verbindung abgebrochen werden und der Teilnehmer muss die Verbindung erneut aufbauen. Das Abbrechen der Verbindung begründet sich dadurch, dass in der Verbindung normalerweise eine zustandsbehaftete Session existiert. Nun sorgt das Referenzmittel dafür, dass der erneute Verbindungsaufbau auf dem Ersatz-Automatisierungsgerät landet.

Vorteilhafterweise erfolgt ein Verbindungsaufbau durch die weiteren Automatisierungskomponenten zu dem ersten Automatisierungsgerät oder zu dem zweiten Automatisierungsgerät durch ansprechen der Referenzadresse durch die weiteren Automatisierungskomponenten.

Das Referenzmittel kann als separates Gerät ausgestaltet sein und demnach auch als separates Gerät betrieben werden und vorteilhafterweise getrennt von dem ersten Automatisierungsgerät und dem zweiten Automatisierungsgerät an dem Feldbus betrieben werden.

Für eine verbesserte Diagnosefreundlichkeit ist es von Vorteil, wenn in dem Referenzmittel ein Überwachungsmittel betrieben wird, welches aufgebaute Verbindungen der weiteren Automatisierungskomponenten zu dem ersten Automatisierungsgerät auf einen Verbindungsabbruch überwacht.

Insbesondere für den Fall, dass das Referenzmittel an eine beliebige Stelle an den Feldbus angeschlossen wird, ist es von Vorteil, wenn in dem Referenzmittel ein Initialisierungsmittel betrieben wird, welches beim erstmaligen Anschalten des Referenzmittels an den Feldbus das Anschalten detektiert und das erste Automatisierungsgerät und/oder das zweite Automatisierungsgerät über seine Existenz am Feldbus informiert, wobei weiterhin die Automatisierungsgeräte betrieben werden nach der Information der Existenz des Referenzmittels diesem mitzuteilen, welche der beiden Automatisierungsgeräte z.Z. die technische Einrichtung steuert.

Eine weitere Ausgestaltung der Informationsmitteilung über die Existenz des Referenzmittels am Feldbus sieht vor, dass das Initialisierungsmittel an das erste Automatisierungsgerät einen ersten Mitteilungsaufruf und an das zweite Automatisierungsgerät einen zweiten Mitteilungsaufruf absetzt, wobei der erste Mitteilungsaufruf von dem ersten Automatisierungsgerät mit einer ersten Antwort quittiert wird und der zweite Mitteilungsaufruf von dem zweiten Automatisierungsgerät mit einer zweiten Antwort quittiert wird, wobei für den Fall, dass die erste Antwort das erste Automatisierungsgerät als Haupt-Automatisierungsgerät offenbart, das Referenzmittel derart konfiguriert wird, dass an die Referenzadresse gerichtete Verbindungsanfragen von den weiteren an den Feldbus angeschlossenen Automatisierungskomponenten mittels der ersten Adresse zu dem ersten Automatisierungsgerät geleitet werden und für den Fall, dass die zweite Antwort das zweite Automatisierungsgerät als Haupt-Automatisierungsgerät offenbart, das Referenzmittel derart konfiguriert wird, dass an die Referenzadresse gerichteten Verbindungsanfragen von den weiteren an den Feldbus angeschlossenen Automatisierungskomponenten mittels der zweiten Adresse zu dem zweiten Automatisierungsgerät geleitet werden.

Im Sinne der Erfindung ist etwas redundant, wenn es mehrfach in gleicher oder sehr ähnlicher Ausführung vorhanden ist. Hochverfügbarkeit wird üblicherweise sichergestellt, in dem bei Ausfall einer Systemkomponente eine für diesen Fall bereitgehaltene gleichwertige Komponente die Aufgabe der ausgefallenen übernimmt. Weil die Wahrscheinlichkeit gering ist, dass zwei gleichartige Komponenten gleichzeitig ausfallen, werden hohe Verfügbarkeitswerte erreicht.

Die Zeichnung zeigt ein Ausführungsbeispiel eines redundanten Automatisierungsgerätes mit einem Referenzmittel. Es zeigt:
- FIG 1: ein redundantes Automatisierungsgerät zur Steuerung einer technischen Einrichtung in einer schematischen Darstellung, und
- FIG 2: das für das redundante Automatisierungsgerät notwendige Referenzmittel in einer Detaildarstellung.

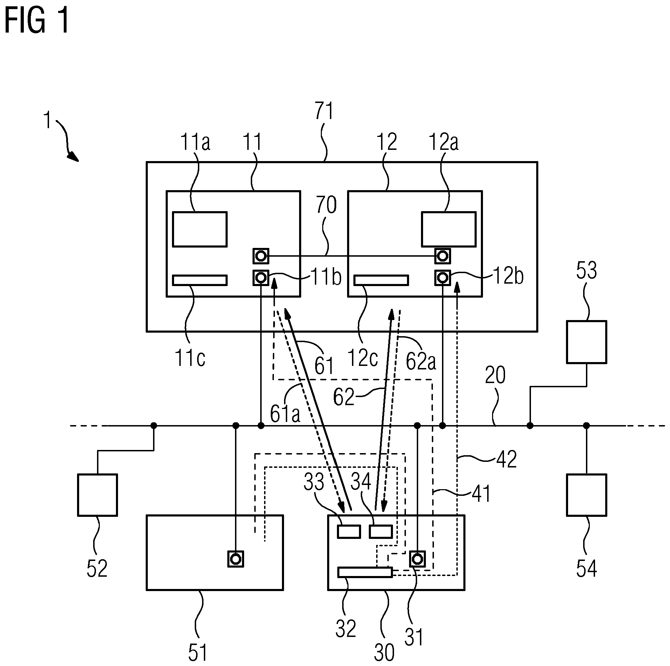

Gemäß FIG 1 ist ein redundantes Automatisierungssystem 1 zur Steuerung einer technischen Einrichtung oder eines technischen Prozesses dargestellt. Ein H-System 71 ergibt sich durch die Zusammenstellung eines ersten Automatisierungsgerätes 11 und eines zweiten Automatisierungsgerätes 12, welche zur Synchronisation miteinander über eine Kopplung 70 verbunden sind. Das erste Automatisierungsgerät 11, welches als ein Haupt-Automatisierungsgerät oder als ein Master ausgebildet ist, und das zweite Automatisierungsgerät 12, welches als ein Ersatz-Automatisierungsgerät oder als eine Reserve ausgebildet ist, werden insbesondere zur Steuerung von sicherheitskritischen Prozessen, wie beispielsweise in der Petrochemie eingesetzt.

Das erste Automatisierungsgerät 11 weist ein erstes Steuerungsprogramm 11a und das zweite Automatisierungsgerät 11 weist ein zweites Steuerungsprogramm 12a zum Steuern der technischen Einrichtung auf. Das erste und das zweite Steuerungsprogramm 11a, 12a sind derart ausgestaltet, dass sie jeweils die gleichen Steuerungsaufgaben für die technischen Einrichtung ausführen können.

Für eine Kommunikation mit weiteren an einen Feldbus 20 angeschlossenen Automatisierungskomponenten 51,...,54 weist das erste Automatisierungsgerät 11 eine erste Datenschnittstelle 12b auf. Auch das zweite Automatisierungsgerät 12 weist für die Kommunikation über den Feldbus 20 eine zweite Datenschnittstelle 11b auf. Die erste Datenschnittstelle 11b und die zweite Datenschnittstelle 12b sind an dem Feldbus 20 angeschlossen, wobei der ersten Datenschnittstelle 11b eine erste Adresse 11c und der zweiten Datenschnittstelle 12b eine zweite Adresse 12c für einen Kommunikationsaufbau der angeschlossenen Automatisierungskomponenten 51,...,54 zu den ersten Automatisierungsgerät 11 bzw. zu dem zweiten Automatisierungsgerät 12 zugeordnet ist.

Ausgehend von dem Fall, dass beispielsweise eine erste Automatisierungskomponente 51 während der Steuerung der technischen Einrichtung zunächst immer mit dem ersten Automatisierungsgerät 11 kommuniziert und im Laufe der Zeit das erste Automatisierungsgerät 11 ausfallen würde, so würde die Verbindung von der ersten Automatisierungskomponente 51 zu dem ersten Automatisierungsgerät 11 abbrechen.

Vor der erfindungsgemäßen Lösung hatte die erste Automatisierungskomponente 51 nun keine Kenntnis von der zweiten Adresse 12c des zweiten Automatisierungsgerätes 12 oder es war in der ersten Automatisierungskomponente 51 die eingangs genannte Spezialimplementierung implementiert. Durch ein Referenzmittel 30 mit einer an den Feldbus 20 angeschlossenen Referenzdatenschnittstelle 31, welcher eine Referenzadresse 32 zugeordnet ist, ist es nun möglich, dass bei Ausfall des ersten Automatisierungsgerätes 11 eine von dem ersten Automatisierungsgerät 11 abgebrochene Verbindung automatisch zu den zweiten Automatisierungsgerät 12 aufgebaut wird. Das Referenzmittel 30 ist derart ausgestaltet, einen ersten Verbindungsweg 41 zwischen an den Feldbus 20 angeschlossenen Automatisierungskomponenten 51,...,54 und dem ersten Automatisierungsgerät 11 zu schalten und weiterhin ist es ausgestaltet, den Ausfall des ersten Automatisierungsgerätes 11 zu erkennen und daraufhin einen zweiten Verbindungsweg 42 zwischen den weiteren an den Feldbus 20 angeschlossenen Automatisierungskomponenten 51,...,54 und dem zweiten Automatisierungsgerät 12 zu schalten.

Das redundante Automatisierungssystem 1 ist derart aufgebaut, dass ein Verbindungsaufbau egal durch welche weitere Automatisierungskomponente, beispielsweise die erste Automatisierungskomponente 51, eine zweite Automatisierungskomponente 52, eine dritte Automatisierungskomponente 53 oder eine vierte Automatisierungskomponente 54, welche alle an den Feldbus 20 angeschlossen sind, immer zu einer der beiden Automatisierungsgeräte 11,12 gerichtet wird. Ein Verbindungsaufbau durch die weiteren Automatisierungskomponenten 51,...,54 zu dem ersten Automatisierungsgerät 11 oder zu dem zweiten Automatisierungsgerät 12 erfolgt demnach immer durch Ansprechen der Referenzadresse 32.

Das Referenzmittel 30 ist als ein separates eigenständiges Gerät ausgestaltet und getrennt von dem ersten Automatisierungsgerät 11 und dem zweiten Automatisierungsgerät 12 an den Feldbus 20 angeschlossen.

Für eine erweiterte Diagnose weist das Referenzmittel 30 ein Überwachungsmittel 33 auf, welches ausgestaltet ist, aufgebaute Verbindungen der weiteren Automatisierungskomponenten 51,...,54 zu dem ersten Automatisierungsgerät 11 auf einen Verbindungsabbruch zu überwachen.

Für den Fall, dass das Referenzmittel 30 als ein separates eigenständiges Gerät ausgestaltet ist und beliebig an den Feldbus 20 angeschaltet werden kann, weist das Referenzmittel 30 ein Initialisierungsmittel 34 auf, welches ausgestaltet ist, beim erstmaligen Anschalten des Referenzmittels 30 mit seiner Referenzdatenschnittstelle 31 an den Feldbus 20 das erste Automatisierungsgerät 11 und/oder das zweite Automatisierungsgerät 12 über seine Existenz am Feldbus 20 zu informieren, wobei weiterhin die Automatisierungsgeräte 11,12 ausgestaltet sind, aufgrund der Existenz des Referenzmittels 30 diesem mitzuteilen, welches der beiden Automatisierungsgeräte 11,12 z.Z. die technische Einrichtung steuert bzw. die Rolle des Haupt-Automatisierungsgerätes oder Masters inne hat.

Mit den durchgezogenen bzw. gestrichelten Pfeilen zwischen dem Referenzmittel 30 und dem ersten Automatisierungsgerät 11 und dem zweiten Automatisierungsgerät 12 ist gezeigt, dass ein erster Mitteilungsaufruf 61 von dem Referenzmittel 31 an das erste Automatisierungsgerät 11 abgesetzt wird und ein zweiter Mitteilungsaufruf 62 von dem Referenzmittel 30 an das zweite Automatisierungsgerät 12 abgesetzt wird. Auf den ersten Mitteilungsaufruf 61 reagiert das erste Automatisierungsgerät 11 mit einer ersten Antwort 61a und auf den zweiten Mitteilungsaufruf 62 reagiert das zweite Automatisierungsgerät 12 mit einer zweiten Antwort 62a. In der ersten Antwort 61a bzw. in der zweiten Antwort 62a können folgende Informationen enthalten sein. Das erste Automatisierungsgerät 11 ist als ein Haupt-Automatisierungsgerät ausgestaltet, demnach ist das zweite Automatisierungsgerät 12 als ein Ersatz-Automatisierungsgerät ausgestaltet. Aus dieser Information kann das Referenzmittel 30 entnehmen, dass es bei einer Verbindungsanfrage einer weiteren an den Feldbus angeschlossenen Automatisierungskomponente 51,...,54 an das redundante Automatisierungssystem 1 die erste Adresse 11c verwenden muss.

Sollte das erste Automatisierungsgerät 11 ausfallen, so teilt es entweder kurz vor Ausfall dem Referenzmittel 30 dieses noch mit oder das Referenzmittel 30 erkennt, dass eine Verbindung zu dem ersten Automatisierungsgerät 11 nicht mehr aufgebaut werden kann und schaltet demnach den ersten Verbindungsweg 41 mittels der zweiten Adresse 12c auf den zweiten Verbindungsweg 42 um, so dass das zweite Automatisierungsgerät 12 erreicht werden kann.

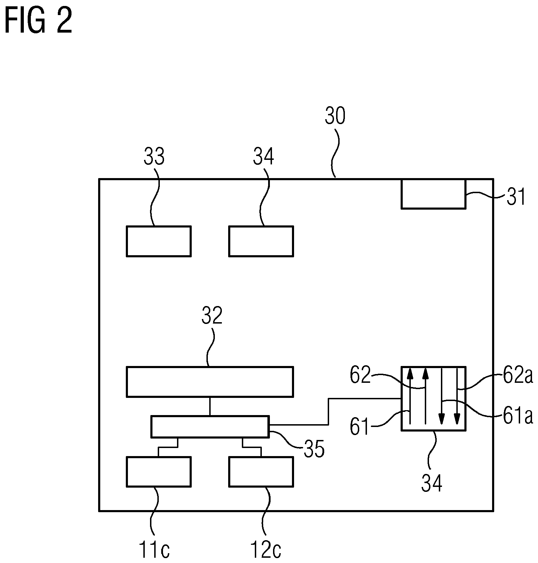

Gemäß der FIG 2 ist das Referenzmittel 30 in einer detaillierten Blockschaltbilddarstellung aufgezeigt. Das Referenzmittel 30 verfügt über die bereits genannte Referenzdatenschnittstelle 31, ein Überwachungsmittel 33, ein Initialisierungsmittel 34 und seine eigene Referenzadresse 32.

Das Initialisierungsmittel 34 kann ein erstmaliges Anschalten an den Feldbus 20 erkennen und demnach an das erste Automatisierungsgerät 11 und das zweite Automatisierungsgerät 12 einen ersten Mitteilungsaufruf 61 bzw. einen zweiten Mitteilungsaufruf 62 absetzen, welche in der Regel mit einer ersten Antwort 61a bzw. einer zweiten Antwort 62a von den Automatisierungsgeräten 11,12 quittiert werden.

Auch steht das Initialisierungsmittel 34 mit einer Umschalteinrichtung 35 für die Zieladresse in Verbindung.

Ein an den Feldbus 20 angeschlossener weiterer Teilnehmer bzw. eine beliebige an den Feldbus 20 angeschlossene Automatisierungskomponente 51,...,54 spricht bei einem Verbindungsaufbau zu dem redundanten Automatisierungssystem 1 grundsätzlich die Referenzadresse 32 des Referenzmittels 30 an. Aufgrund der Informationen über den derzeit aktiven Master in dem Initialisierungsmittel 34, welche durch die erste und zweite Antwort 61a,62a vorliegen, kann das Initialisierungsmittel 34 die Umschalteinrichtung 35 derart steuern, dass bei einem Verbindungsaufbau über die Referenzadresse 32 als Zieladresse entweder die erste Adresse 11c des ersten Automatisierungsgerätes 11 oder die zweite Adresse 12c des zweiten Automatisierungsgerätes 12 gewählt wird.

## Patentansprüche

1. Redundantes Automatisierungssystem (1) zur Steuerung einer technischen Einrichtung umfassend
- einen Feldbus
- ein erstes Automatisierungsgerät (11) und
- ein zweites Automatisierungsgerät (12), wobei das
- erste Automatisierungsgerät (11) ein erstes Steuerungsprogramm (11a) und das
- zweite Automatisierungsgerät (12) ein zweites Steuerungsprogramm (12a) zum Steuern der technischen Einrichtung aufweist, wobei
- das erste und das zweite Steuerungsprogramm (11a, 12a) derart ausgestaltet sind das sie jeweils die gleichen Steuerungsaufgaben für die technische Einrichtung ausführen, wobei das
- erste Automatisierungsgerät (11) eine erste Datenschnittstelle (11b), welche an den Feldbus (20) angeschlossen ist und das zweite Automatisierungsgerät (12) eine zweite Datenschnittstelle (12b) aufweist, welche an den Feldbus (20) angeschlossen ist, wobei
- der ersten Datenschnittstelle (11b) eine erste Adresse (11c) und der zweiten Datenschnittstelle (12b) eine zweite Adresse (12c) zugeordnet ist,
**gekennzeichnet durch**
ein Referenzmittel (30) mit einer an den Feldbus (20) angeschlossenen Referenzdatenschnittstelle (31), welcher eine Referenzadresse (32) zugeordnet ist, wobei das Referenzmittel (30) ausgestaltet ist einen ersten Verbindungsweg (41) zwischen weiteren an den Feldbus (20) angeschlossenen Automatisierungskomponenten (51,...,54) zu dem ersten Automatisierungsgerät (11) zu Schalten und weiterhin ausgestaltet ist einen Ausfall des ersten Automatisierungsgerätes (11) zu Erkennen und daraufhin einen zweiten Verbindungsweg (42) zwischen den weiteren an den Feldbus (20) angeschlossenen Automatisierungskomponenten (51,...,54) und dem zweiten Automatisierungsgerät (12) zu Schalten.

2. Redundantes Automatisierungssystem (1) nach Anspruch 1, derart ausgestaltet, dass ein Verbindungsaufbau durch die weiteren Automatisierungskomponenten (51,...,54) zu dem ersten Automatisierungsgerät (11) oder zu dem zweiten Automatisierungsgerät (12) durch Ansprechen der Referenzadresse (32) durch die weiteren Automatisierungskomponenten (51,...,54) aufgebaut ist.

3. Redundantes Automatisierungssystem (1) nach Anspruch 1 oder 2, wobei das Referenzmittel (30) als separates Gerät ausgestaltet ist und getrennt von dem erstes Automatisierungsgerät (11) und dem zweiten Automatisierungsgerät (12) an den Feldbus (20) angeschlossen ist.

4. Redundantes Automatisierungssystem (1) nach einem der Ansprüche 1 bis 3, wobei das Referenzmittel (30) ein Überwachungsmittel (33) aufweist, welches ausgestaltet ist aufgebaute Verbindungen der weiteren Automatisierungskomponenten (51,...,54) zu dem ersten Automatisierungsgerät (11) auf einen Verbindungsabbruch zu Überwachen.

5. Redundantes Automatisierungssystem (1) nach einem der Ansprüche 1 bis 4, wobei das Referenzmittel (30) ein Initialisierungsmittel (34) aufweist, welches ausgestaltet ist beim erstmaligen Anschalten des Referenzmittels (30) an den Feldbus (20) das erste Automatisierungsgerät (11) und/oder das zweite Automatisierungsgerät (12) über seine Existenz am Feldbus (20) zu informieren, wobei weiterhin die Automatisierungsgeräte (11,12) ausgestaltet sind aufgrund der Existenz des Referenzmittels (30) diesem mitzuteilen, welches der beiden Automatisierungsgeräte (11,12) zur Zeit die technische Einrichtung steuert.

6. Verfahren zum Betrieb eines redundanten Automatisierungssystems (1) zur Steuerung einer technischen Einrichtung wobei
- ein erstes Automatisierungsgerät (11) als ein Haupt-Automatisierungsgerät betrieben wird und
- ein zweites Automatisierungsgerät (12) als ein Ersatz-Automatisierungsgerät betrieben wird, wobei das
- erste Automatisierungsgerät (11) mit dem zweiten Automatisierungsgerät über eine Kopplung (70) synchronisiert wird, wobei in dem
- ersten Automatisierungsgerät (11) ein erstes Steuerungsprogramm (11a) und in dem
- zweiten Automatisierungsgerät (12) ein zweites Steuerungsprogramm (12a) zum Steuern der technischen Einrichtung betrieben wird, wobei
- das erste und das zweite Steuerungsprogramm (11a, 12a) funktional jeweils die gleichen Steuerungsaufgaben für die technische Einrichtung ausführen, wobei das
- erste Automatisierungsgerät (11) über eine erste Datenschnittstelle (11b) an einen Feldbus (20) betrieben wird und das zweite Automatisierungsgerät (11) über eine zweite Datenschnittstelle (12b) an den Feldbus (20) betrieben wird, wobei
- der ersten Datenschnittstelle (11b) eine erste Adresse (11c) und der zweiten Datenschnittstelle (12b) eine zweite Adresse (12c) zugeordnet wird,
**dadurch gekennzeichnet, dass**
ein Referenzmittel (30) mit einer Referenzadresse (32) derart betrieben wird, dass es einen ersten Verbindungsweg (41) zwischen weiteren an den Feldbus (20) angeschlossenen Automatisierungskomponenten (51,...,54) zu dem ersten Automatisierungsgerät (11) schaltet und weiterhin betrieben wird einen Ausfall des ersten Automatisierungsgerätes (11) zu erkennen und daraufhin einen zweiten Verbindungsweg (42) zwischen den weiteren an den Feldbus (20) angeschlossenen Automatisierungskomponenten (51,...,54) zu dem zweiten Automatisierungsgerät (12) zu schalten.

7. Verfahren nach Anspruch 6, wobei der Verbindungsaufbau durch die weiteren Automatisierungskomponenten (51,...,54) zu dem ersten Automatisierungsgerät (11) oder zu dem zweiten Automatisierungsgerät (12) durch ansprechen der Referenzadresse (32) durch die weiteren Automatisierungskomponenten (51,...,54) erfolgt.

8. Verfahren nach Anspruch 6 oder 7, wobei das Referenzmittel (30) als separates Gerät ausgestaltet ist und getrennt von dem ersten Automatisierungsgerät (11) und dem zweiten Automatisierungsgerät (12) an dem Feldbus (20) betrieben wird.

9. Verfahren nach einem der Ansprüche 6 bis 8, wobei in dem Referenzmittel (30) ein Überwachungsmittel (33) betrieben wird, welches aufgebaute Verbindungen der weiteren Automatisierungskomponenten (51,...,54) zu dem ersten Automatisierungsgerät (11) auf einen Verbindungsabbruch überwacht.

10. Verfahren nach einem der Ansprüche 6 bis 9, wobei in dem Referenzmittel (30) ein Initialisierungsmittel (34) betrieben wird, welches beim erstmaligen Anschalten des Referenzmittels (30) an den Feldbus (20) das Anschalten detektiert und das erste Automatisierungsgerät (11) und/oder das zweite Automatisierungsgerät (12) über seine Existenz am Feldbus (20) informiert, wobei weiterhin die Automatisierungsgeräte (11,12) betrieben werden nach der Information der Existenz des Referenzmittels (30) diesem mitzuteilen, welches der beiden Automatisierungsgeräte (11,12) zur Zeit die technische Einrichtung steuert.

11. Verfahren nach Anspruch 10, wobei das Initialisierungsmittel (34) an das erste Automatisierungsgerät (11) einen ersten Mitteilungsaufruf (61) und an das zweite Automatisierungsgerät (12) einen zweiten Mitteilungsaufruf (62) absetzt, wobei der erste Mitteilungsaufruf (61) von dem ersten Automatisierungsgerät (11) mit einer ersten Antwort (61a) quittiert wird und der zweite Mitteilungsaufruf (62) von dem zweiten Automatisierungsgerät (12) mit einer zweiten Antwort (62a) quittiert wird, wobei für den Fall, dass die erste Antwort (61a) das erste Automatisierungsgerät (11) als Haupt-Automatisierungsgerät offenbart, das Referenzmittel (30) derart konfiguriert wird, das an die Referenzadresse (32) gerichtete Verbindungsanfragen von den weiteren an den Feldbus (20) angeschlossenen Automatisierungskomponenten (51,..,52) mittels der ersten Adresse (11c) zu dem ersten Automatisierungsgerät (11) geleitet werden und für den Fall, dass die zweite Antwort (62a) das zweite Automatisierungsgerät (12) als Haupt-Automatisierungsgerät offenbart, das Referenzmittel (30) derart konfiguriert wird, das an die Referenzadresse (32) gerichtete Verbindungsanfragen von den weiteren an den Feldbus (20) angeschlossenen Automatisierungskomponenten (51,..,52) mittels der zweiten Adresse (12c) zu dem zweiten Automatisierungsgerät (11) geleitet werden.

## Claims

1. Redundant automation system (1) for controlling a technical apparatus, comprising
- a field bus
- a first automation device (11) and
- a second automation device (12), wherein
- the first automation device (11) has a first control program (11a) and
- the second automation device (12) has a second control program (12a) for controlling the technical apparatus, wherein
- the first and the second control programs (11a, 12a) are so embodied as to execute the same control tasks in each case for the technical apparatus, wherein
- the first automation device (11) has a first data interface (11b) which is connected to the field bus (20) and the second automation device (12) has a second data interface (12b) which is connected to the field bus (20), wherein
- the first data interface (11b) is assigned a first address (11c) and the second data interface (12b) is assigned a second address (12c),
**characterised by**
a reference means (30) comprising a reference data interface (31) which is connected to the field bus (20) and to which a reference address (32) is assigned, wherein the reference means (30) is so embodied as to activate a first connection path (41) between further automation components (51,...,54), these being connected to the field bus (20), and the first automation device (11), and is furthermore so embodied as to recognise a failure of the first automation device (11) and thereupon to activate a second connection path (42) between the automation components (51,...,54), these being connected to the field bus (20), and the second automation device (12).

2. Redundant automation system (1) according to claim 1, being embodied such that a connection setup by the further automation components (51,...,54) to the first automation device (11) or to the second automation device (12) is established by means of the further automation components (51,...,54) contacting the reference address (32).

3. Redundant automation system (1) according to claim 1 or 2, wherein the reference means (30) is embodied as a separate device and is connected to the field bus (20) separately from the first automation device (11) and the second automation device (12).

4. Redundant automation system (1) according to one of claims 1 to 3, wherein the reference means (30) has a monitoring means (33) which is so embodied as to monitor established connections of the further automation components (51,...,54) to the first automation device (11) in respect of a connection termination.

5. Redundant automation system (1) according to one of claims 1 to 4, wherein the reference means (30) has an initialisation means (34) which is so embodied as to inform the first automation device (11) and/or the second automation device (12) of the existence on the field bus (20) of said reference means (30) when the latter is first connected to the field bus (20), wherein the automation devices (11,12) upon learning of the existence of the reference means (30) are furthermore so embodied as to notify said reference means (30) which of the two automation devices (11,12) currently controls the technical apparatus.

6. Method for operating a redundant automation system (1) for controlling a technical apparatus, wherein
- a first automation device (11) is operated as a main automation device and
- a second automation device (12) is operated as a substitute automation device, wherein
- the first automation device (11) is synchronised with the second automation device via a link (70), wherein
- a first control program (11a) for controlling the technical apparatus is operated in the first automation device (11) and
- a second control program (12a) for controlling the technical apparatus is operated in the second automation device (12), wherein
- the first and the second control programs (11a, 12a) in functional terms each execute the same control tasks for the technical apparatus, wherein
- the first automation device (11) is operated on a field bus (20) via a first data interface (11b) and the second automation device (11) is operated on the field bus (20) via a second data interface (12b), wherein
- the first data interface (11b) is assigned a first address (11c) and the second data interface (12b) is assigned a second address (12c),
**characterised in that**
a reference means (30) comprising a reference address (32) is so operated as to activate a first connection path (41) between further automation components (51,...,54), these being connected to the field bus (20), and the first automation device (11), and is furthermore so operated as to recognise a failure of the first automation device (11) and thereupon to activate a second connection path (42) between the further automation components (51,...,54), these being connected to the field bus (20), and the second automation device (12).

7. Method according to claim 6, wherein the connection setup by the further automation components (51,...,54) to the first automation device (11) or the second automation device (12) is effected by means of the further automation components (51,...,54) contacting the reference address (32).

8. Method according to claim 6 or 7, wherein the reference means (30) is embodied as a separate device and is operated separately from the first automation device (11) and the second automation device (12) on the field bus (20).

9. Method according to one of claims 6 to 8, wherein a monitoring means (33) is operated in the reference means (30) and monitors established connections of the further automation components (51,...,54) to the first automation device (11) in respect of a connection termination.

10. Method according to one of claims 6 to 9, wherein an initialisation means (34) is operated in the reference means (30), detecting the initial connection of the reference means (30) to the field bus (20) and informing the first automation device (11) and/or the second automation device (12) of its existence on the field bus (20), wherein the automation devices (11,12) having been informed of the existence of the reference means (30) are furthermore so operated as to notify said reference means (30) which of the two automation devices (11,12) currently controls the technical apparatus.

11. Method according to claim 10, wherein the initialisation means (34) initiates a first notification call (61) to the first automation device (11) and a second notification call (62) to the second automation device (12), wherein the first notification call (61) is acknowledged by the first automation device (11) by means of a first reply (61a) and the second notification call (62) is acknowledged by the second automation device (12) by means of a second reply (62a), wherein in the event that the first reply (61a) reveals that the first automation device (11) is the main automation device, the reference means (30) is configured such that connection requests directed to the reference address (32) from the further automation components (51,..,52) connected to the field bus (20) are routed by means of the first address (11c) to the first automation device (11), and in the event that the second reply (62c) reveals that the second automation device (12) is the main automation device, the reference means (30) is configured such that connection requests directed to the reference address (32) from the further automation components (51,..,52) connected to the field bus (20) are routed by means of the second address (12c) to the second automation device (11).

## Revendications

1. Système (1) d'automatisation redondante pour commander un dispositif technique, comprenant
- un bus sur site
- un premier appareil (11) d'automatisation et
- un deuxième appareil (12) d'automatisation, dans lequel
- le premier appareil (11) d'automatisation a un premier programme (11a) de commande et
- le deuxième appareil (12) d'automatisation a un deuxième programme (12a) de commande pour commander le dispositif technique, dans lequel
- le premier et le deuxième programmes (11a, 12a) de commande sont conformés de manière à exécuter chacun les mêmes tâches de commande du dispositif technique,
dans lequel
- le premier appareil (11) d'automatisation a une première interface (11b) de données, qui est raccordée au bus (20) sur site, et le deuxième appareil (12) d'automatisation a une deuxième interface (12b) de données, qui est raccordée au bus (20) sur site, dans lequel
- à la première interface (11b) de données est affectée une première adresse (11c) et, à la deuxième interface (12b) de données, une deuxième adresse (12c),
**caractérisé par**
un moyen (30) de référence ayant une interface (31) de données de référence, qui est reliée au bus (20) sur site et à laquelle est affectée une adresse (32) de référence, le moyen (30) de référence étant conformé pour connecter un premier trajet (41) de liaison entre d'autres composants (51, ..., 54) d'automatisation, raccordés au bus (20) sur site, et le premier appareil (11) d'automatisation, et conformé, en outre, pour détecter une défaillance du premier appareil (11) d'automatisation et connecter ensuite un deuxième trajet (42) de liaison entre les autres composants (51, ..., 54) d'automatisation, raccordés au bus (20) sur site, et le deuxième appareil (12) d'automatisation.

2. Système (1) d'automatisation redondant suivant la revendication 1, conformé de manière à établir une structure de liaison par les autres composants (51, ..., 54) d'automatisation avec le premier appareil (11) d'automatisation ou avec le deuxième appareil (12) d'automatisation, par déclenchement de l'adresse (32) de référence par les autres composants (51, ..., 54) d'automatisation.

3. Système (1) d'automatisation redondant suivant la revendication 1 ou 2, dans lequel le moyen (30) de référence est conformé sous la forme d'un appareil distinct et raccordé au bus (20) sur site séparément du premier appareil (11) d'automatisation et du deuxième appareil (12) d'automatisation.

4. Système (1) d'automatisation redondant suivant l'une des revendications 1 ou 3, dans lequel le moyen (30) de référence a un moyen (33) de contrôle conformé pour contrôler, du point de vue d'une rupture de liaison, des liaisons établies des autres composants (51, ..., 54) d'automatisation avec le premier appareil (11) d'automatisation.

5. Système (1) d'automatisation redondant suivant l'une des revendications 1 ou 4, dans lequel le moyen (30) de référence a un moyen (34) d'initialisation conformé pour, lors de la connexion la première fois du moyen (30) de référence au bus (20) sur site, informer le premier appareil (11) d'automatisation et/ou le deuxième appareil (12) d'automatisation de son existence sur le bus (20) sur site, dans lequel en outre les appareils (11, 12) d'automatisation sont conformés, pour faire part, sur la base de l'existence du moyen (30) de référence, à celui-ci de celui des deux appareils (11, 12) d'automatisation qui, à cet instant, commande le dispositif technique.

6. Procédé pour faire fonctionner un système (1) d'automatisation redondant pour commander un dispositif technique, dans lequel
- on fait fonctionner un premier appareil (11) d'automatisation comme appareil d'automatisation principal et
- on fait fonctionner un deuxième appareil (12) d'automatisation comme appareil d'automatisation de remplacement, dans lequel
- on synchronise le premier appareil (11) d'automatisation avec le deuxième appareil d'automatisation par un couplage (70), dans lequel
- on fait fonctionner, dans le premier appareil (11) d'automatisation, un premier programme (11a) de commande et
- dans le deuxième appareil (12) d'automatisation, un deuxième programme (12a) de commande pour commander le dispositif technique, dans lequel
- le premier et le deuxième programmes (11a, 12a) de commande exécutent fonctionnellement chacun les mêmes tâches de commande du dispositif technique, dans lequel
- on fait fonctionner le premier appareil (11) d'automatisation sur un bus (20) sur site, par l'intermédiaire d'une première interface (11b) de données et le deuxième appareil (11) d'automatisation sur le bus (20) sur site, par l'intermédiaire d'une deuxième interface (12b) de données, dans lequel
- à la première interface (11b) de données, on affecte une première adresse (11c) et, à la deuxième interface (12b) de données, une deuxième adresse (12c),
**caractérisé en ce que**
on fait fonctionner un moyen (30) de référence ayant une adresse (32) de référence, de manière à connecter un premier trajet (41) de liaison entre d'autres composants (51, ..., 54) d'automatisation raccordés au bus (20) sur site et le premier appareil (11) d'automatisation et on le fait fonctionner en outre pour détecter une défaillance du premier appareil (11) d'automatisation, et connecter ensuite un deuxième trajet (42) de liaison entre les autres composants (51, ..., 54) d'automatisation, raccordés au bus (20) sur site, et le deuxième appareil (12) d'automatisation.

7. Procédé suivant la revendication 6, dans lequel l'établissement de la liaison, par les autres composants (51, ..., 54) d'automatisation, avec le premier appareil (11) d'automatisation ou avec le deuxième appareil (12) d'automatisation s'effectue en déclenchant l'adresse (32) de référence par les autres composants (51, ..., 54) d'automatisation.

8. Procédé suivant la revendication 6 ou 7, dans lequel le moyen (30) de référence est conformé en appareil distinct et on le fait fonctionner sur le bus (20) sur site séparément du premier appareil (11) d'automatisation et du deuxième appareil (12) d'automatisation.

9. Procédé suivant l'une des revendications 6 à 8, dans lequel on fait fonctionner, dans le moyen (30) de référence, un moyen (33) de contrôle, qui contrôle une rupture des liaisons établies entre les autres composants (51, ..., 54) d'automatisation et le premier appareil (11) d'automatisation.

10. Procédé suivant l'une des revendications 6 à 9, dans lequel on fait fonctionner, dans le moyen (30) de référence, un moyen (34) d'initialisation, conformé pour, lors de la connexion la première fois du moyen (30) de référence au bus (20) sur site, informer le premier appareil (11) d'automatisation et/ou le deuxième appareil (12) d'automatisation de son existence, dans lequel, en outre, les appareils (11, 12) d'automatisation sont conformés, pour faire part, sur la base de l'existence du moyen (30) de référence, à celui-ci de celui des deux appareils (11, 12) d'automatisation qui, à cet instant, commande le dispositif technique.

11. Procédé suivant la revendication 10, **caractérisé en ce que** le moyen (34) d'initialisation émet, vers le premier appareil (11) d'automatisation, un premier appel (61) et, vers le deuxième appareil (12) d'automatisation, un deuxième appel (62), le premier appareil (11) d'automatisation accusant réception du premier appel (61) par une première réponse (61a) et le deuxième appareil (12) d'automatisation accusant réception du deuxième appel (62) par une deuxième réponse (62a), dans lequel, dans le cas où la première réponse (61a) révèle que le premier appareil (11) d'automatisation est l'appareil d'automatisation principal, le moyen (30) de référence est configuré de manière à ce que des demandes de liaison, dirigées sur l'adresse (32) de référence par les autres composants (51, ..., 52) d'automatisation raccordés au bus (20) sur site, soient envoyées au premier appareil (11) d'automatisation au moyen de la première adresse (11c), et dans le cas où la deuxième réponse (62a) révèle que le deuxième appareil (12) d'automatisation est l'appareil d'automatisation principal, le moyen (30) de référence est configuré de manière à ce que des demandes de liaison, dirigées sur l'adresse (32) de référence par les autres composants (51, ..., 52) d'automatisation raccordés au bus (20) sur site, soient envoyées au deuxième appareil (11) d'automatisation au moyen de la deuxième adresse (12c).
